# EUROPEAN PATENT APPLICATION

(11) **EP 3 323 842 A1**
(43) Date of publication of application: **23.05.2018**
(21) Application number: 16857184.2
(22) Date of filing: 31.08.2016
(51) Int. Cl.: C08G 8/08, C08G 8/00, C08G 8/20

(54) **LIQUID PHENOLIC RESOL RESIN, METHOD FOR PREPARING LIQUID PHENOLIC RESOL RESIN, AND ARTICLE**

(30) Priority: 21.10.2015 JP 2015207255
(71) Applicant: Sumitomo Bakelite Co.Ltd., Shinagawa-ku Tokyo 140-0002 (JP)
(72) Inventor: SUZUKI Yuji, Tokyo 140-0002 (JP)
(74) Representative: Ter Meer Steinmeister & Partner
(86) International application number: PCT/JP2016/075439
(87) International publication number: WO 2017/068866

(57) **Abstract**

Provided is a liquid phenolic resol resin containing a partial structure represented by General Formula (P-1) [in the formula, R¹, R², and R³ each independently represent a hydrogen atom or -CH₂OH, R⁴ represents a linear unsaturated hydrocarbon group having 10 or more carbon atoms, and * represents a bond].

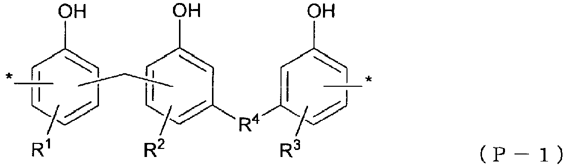

## Description

### Technical Field

The present invention relates to a liquid phenolic resol resin, a method for preparing a liquid phenolic resol resin, and an article.

Priority is claimed on Japanese Patent Application No. 2015-207255, filed on October 21, 2015, the content of which is incorporated herein by reference.

### Background Art

A phenolic resin which is a thermosetting resin is widely used mainly as a binder for binding the materials becoming a substrate of a molded article to each other. Owing to its excellent mechanical characteristics, electric characteristics, and adhesiveness, the phenolic resin is used in various fields. Particularly, in recent years, the amount of friction materials, in which the phenolic resin is used as a binder, used in automobiles, railroad cars, and the like has increased.

Among the friction materials, in a friction material called a wet-type paper friction material used in an automatic transmission of an automatic car and the like, a liquid phenolic resol resin is generally used. The characteristics required for the phenolic resin for the wet-type paper friction material are increasing year after year. Particularly, for the purpose of improving the friction characteristics, a demand for having an improved flexibility of the phenolic resin is growing. However, while the mechanical characteristics of a cured product of a general phenolic resin are excellent, the flexibility thereof cannot be said to be excellent because the cured product is hard and brittle.

Therefore, as a method for solving the aforementioned problem, an attempt is being made in which drying oil or the like is used as a modifying agent in a reaction for synthesizing a phenolic resin so as to improve the flexibility (for example, PTL 1). Into the drying oil-modified phenolic resin, a flexible aliphatic hydrocarbon group is introduced. Therefore, the flexibility of the modified phenolic resin is higher than the flexibility of an unmodified phenolic resin.

Incidentally, in the drying oil-modified phenolic resin described in PTL 1, not all phenolic structural units are bonded to the aliphatic hydrocarbon group. Accordingly, unfortunately, the flexibility improving effect is insufficient. Furthermore, in a case where the aliphatic hydrocarbon group is bonded to cross-linking points in the phenolic structural units, the number of reaction points of the phenolic resin is reduced. Consequently, unfortunately, the curing properties deteriorate.

Furthermore, in recent years, the phenolic resin has been required to have improved friction characteristics so as to respond to the improvement of the fuel efficiency of vehicle and to the increase in load applied to the friction material. Therefore, the phenolic resins for friction materials have been required to have improved flexibility.

In order to solve the above problems, the inventor of the present invention conducted an examination. As a result, the inventor has found that a phenolic resin is effective in which a linear unsaturated hydrocarbon group having 10 or more carbon atoms is bonded to at least one or more meta-positions of all phenolic structural units (for example, PTL 2). However, generally, it is known that there is a trade-off relationship between the flexibility and the durability of a phenolic resin for a friction material. In the phenolic resin described in PTL 2, while the flexibility is improved, the durability is sacrificed. Accordingly, from the viewpoint of enhancing both the flexibility and the durability of the phenolic resin for a friction material, the phenolic resin needs to be improved.

### Citation List

### Patent Literature

[PTL 1] Japanese Unexamined Patent Application, First Publication No. H9-59599
[PTL 2] PCT International Publication No. WO2013/179660

### Summary of Invention

### Technical Problem

The present invention has been made in consideration of the circumstances described above, and an object thereof is to provide a liquid phenolic resol resin, which is excellent in view of curing properties that are characteristics of a phenolic resin and makes it possible to obtain a wet-type paper friction material having excellent flexibility and durability, a method for preparing the liquid phenolic resol resin, and an article including a cured product of a composition containing the liquid phenolic resol resin. Solution to Problem

The present invention has the following aspects.
(1) A liquid phenolic resol resin containing a partial structure represented by General Formula (P-1). 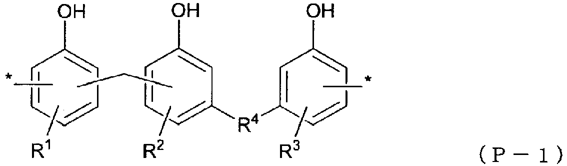
   [In the formula, R¹, R², and R³ each independently represent a hydrogen atom or -CH₂OH, R⁴ represents a linear unsaturated hydrocarbon group having 10 or more carbon atoms, and * represents a bond. Here, a hydrogen atom bonded to a benzene ring having a phenolic hydroxyl group may be substituted with a substituent.]
(2) A method for preparing the liquid phenolic resol resin described in (1), including a first step of obtaining a phenolic compound (B) by reacting phenols (A1), in which a linear unsaturated hydrocarbon group having 10 or more carbon atoms is bonded to at least one or more meta-positions, in the presence of an acid catalyst, and a second step of reacting the phenolic compound (B) with phenols (A2) other than the phenols (A1) (here, a hydrogen atom bonded to a benzene ring having a phenolic hydroxyl group may be substituted with a substituent) and aldehydes (C) in the presence of a base catalyst.
(3) The preparation method described in (2), in which the phenols (A1) include a compound represented by General Formula (A1-1). 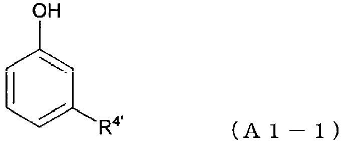
   [In the formula, R⁴' represents a linear unsaturated hydrocarbon group having 10 or more carbon atoms. Here, a hydrogen atom bonded to a benzene ring having a phenolic hydroxyl group may be substituted with a substituent.]
(4) The preparation method described in (3), in which the phenols (A1) are at least one or more phenols selected from the group consisting of cardanol, cardol, and 2-methyl cardol.
(5) An article including a substrate and a cured product of a composition containing the liquid phenolic resol resin described in (1).
(6) The article described in (5) that is a wet-type paper friction material.

### Advantageous Effects of Invention

According to the present invention, it is possible to provide a liquid phenolic resol resin, which is excellent in view of curing properties that are characteristics of a phenolic resin and makes it possible to obtain a wet-type paper friction material having excellent flexibility and durability, a method for preparing the liquid phenolic resol resin, and an article including a cured product of a composition containing the liquid phenolic resol resin.

### Description of Embodiments

Hereinafter, a liquid phenolic resol resin, a method for preparing the same, and an article according to the present embodiment will be specifically described.

### <Liquid phenolic resol resin>

The liquid phenolic resol resin according to the present embodiment contains a partial structure represented by General Formula (P-1). In a case where the resin contains the partial structure shown below, it is possible to obtain a liquid phenolic resol resin which is excellent in view of curing properties as characteristics of a phenolic resin and suitable for obtaining a wet-type paper friction material having excellent flexibility and durability.

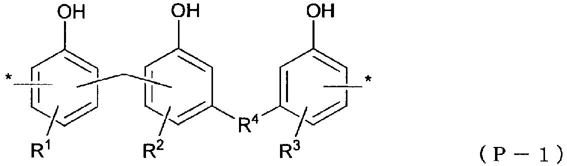

[In the formula, R¹, R², and R³ each independently represent a hydrogen atom or -CH₂OH, R⁴ represents a linear unsaturated hydrocarbon group having 10 or more carbon atoms, and * represents a bond. Here, a hydrogen atom bonded to a benzene ring having a phenolic hydroxyl group may be substituted with a substituent.]

In General Formula (P-1), R¹, R², and R³ each independently represent a hydrogen atom or -CH₂OH. From the viewpoint of improving the curing properties of the liquid phenolic resol resin, at least one of R¹, R², and R³ is preferably a methylol group (-CH₂OH).

In General Formula (P-1), R⁴ represents a linear unsaturated hydrocarbon group having 10 or more carbon atoms. R⁴ is preferably a linear unsaturated hydrocarbon group having 10 to 20 carbon atoms, more preferably a linear unsaturated hydrocarbon group having 12 to 20 carbon atoms, and even more preferably a linear unsaturated hydrocarbon group having 12 to 18 carbon atoms. In a case where the number of carbon atoms in the linear unsaturated hydrocarbon group is equal to or smaller than the upper limit of the aforementioned range, it is easy to dilute the liquid phenolic resol resin with an organic solvent at the time of impregnating a substrate with the resin. In contrast, in a case where the number of carbon atoms in the linear unsaturated hydrocarbon group is equal to or greater than the lower limit described above, it is easy to improve the flexibility of the liquid phenolic resol resin.

The substituent substituting the hydrogen atom bonded to a benzene ring having a phenolic hydroxyl group is not particularly limited, and examples thereof include an acetyl group, a methyl group, and the like.

In the liquid phenolic resol resin according to the present embodiment, the structure other than the partial structure represented by General Formula (P-1) is not particularly limited, and may include, for example, at least one kind of structure selected from the group consisting of a structural unit represented by General Formula (P-2), a structural unit represented by General Formula (P-3), and a structural unit represented by General Formula (P-4). 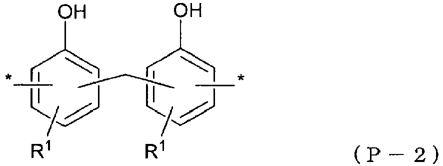 [In the formula, R¹ is as described above.] 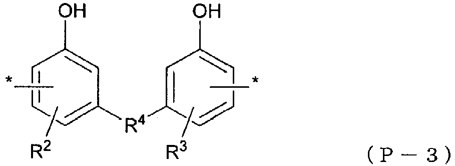 [In the formula, R², R³, R⁴, and * are as described above.] 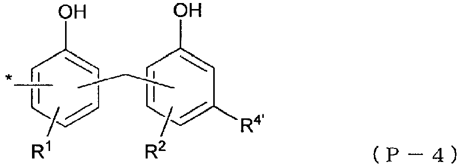 [In the formula, R¹, R², R⁴, and * are as described above.]

### <Method for preparing liquid phenolic resol resin>

The method for preparing the liquid phenolic resol resin according to the present embodiment includes a first step of obtaining a phenolic compound (B) by reacting phenols (A1), in which a linear unsaturated hydrocarbon group having 10 or more carbon atoms is bonded to at least one or more meta-positions, in the presence of an acid catalyst, and a second step of reacting the phenolic compound (B) with phenols (A2) other than the phenols (A1) (here, a hydrogen atom bonded to a benzene ring having a phenolic hydroxyl group may be substituted with a substituent) and aldehydes (C) in the presence of a base catalyst.

In the method for preparing the liquid phenolic resol resin according to the present embodiment, first, a proton (H⁺) supplied from the acid catalyst is added to a carbon-carbon multiple bond in the linear unsaturated hydrocarbon group having 10 or more carbon atoms in the phenols (A1), whereby a carbocation is generated. Then, between the generated carbocation and a benzene ring in another molecule of the phenols (A1), a substitution reaction occurs. It is considered that the phenolic compound (B) is generated in this way. It is considered that between the linear unsaturated hydrocarbon group having 10 or more carbon atoms that is bonded to another molecule of the phenols (A1) and a benzene ring in still another molecule of the phenols (A1), a substitution reaction also occurs. By reacting the phenolic compound (B) generated in this way with the phenols (A2) and the aldehydes (C) in the presence of a base catalyst, the liquid phenolic resol resin according to the present embodiment can be obtained.

### [First step]

In the first step, by reacting the phenols (A1), in which a linear unsaturated hydrocarbon group having 10 or more carbon atoms is bonded to at least one or more meta-positions, in the presence of an acid catalyst, the phenolic compound (B) is obtained.

The phenols (A1) are not particularly limited, but preferably include a compound represented by General Formula (A1-1).

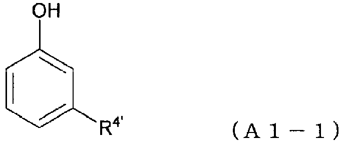

[In the formula, R⁴' represents a linear unsaturated hydrocarbon group having 10 or more carbon atoms. Here, a hydrogen atom bonded to a benzene ring having a phenolic hydroxyl group may be substituted with a substituent.]

R⁴' represents a linear unsaturated hydrocarbon group having 10 or more carbon atoms, and the description of R⁴' is the same as the description of R⁴ in General Formula (P-1). Furthermore, the substituent substituting the hydrogen atom bonded to a benzene ring having a phenolic hydroxyl group is as described above.

Specifically, examples of the phenols (A1) include 3-dodecenyl phenol, 3-tridecenyl phenol, 3-pentadecenyl phenol, 5-tridecenyl resorcinol, 5-pentadecenyl resorcinol, cardanol as a phenol having a linear unsaturated hydrocarbon group having 15 carbon atoms in the meta-position, cardol having a linear unsaturated hydrocarbon group having 15 carbon atoms and a hydroxyl group in the meta-position, 2-methyl cardol as a phenol having a linear unsaturated hydrocarbon group having 15 carbon atoms and a hydroxyl group in the meta-position and having a methyl group in the ortho-position, and the like. Among these, in view of costs, the phenols (A1) are preferably at least one or more phenols selected from the group consisting of cardanol, cardol, and 2-methyl cardol.

The acid catalyst used in the first step is not particularly limited, and examples thereof include an organic acid such as acetic acid or oxalic acid, a mineral acid such as hydrochloric acid, sulfuric acid, or phosphoric acid, diethyl sulfate, p-toluenesulfonic acid, p-phenolsulfonic acid, and the like. Among these, from the viewpoint of adding a proton (H⁺) to a carbon-carbon multiple bond in the linear unsaturated hydrocarbon group having 10 or more carbon atoms in the phenols (A1), sulfuric acid and p-toluenesulfonic acid are preferable.

The phenolic compound (B) obtained in the first step contains at least a partial structure represented by General Formula (B-1).

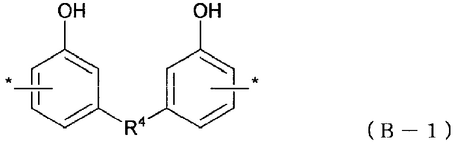

[In the formula, R⁴ and * are as described above.]

### [Second step]

In the second step, by reacting the phenolic compound (B) with phenols (A2) other than the phenols (A1) (here, a hydrogen atom bonded to a benzene ring having a phenolic hydroxyl group may be substituted with a substituent) and aldehydes (C) in the presence of a base catalyst, a liquid phenolic resol resin containing the partial structure represented by General Formula (P-1) is obtained.

The phenols (A2) are a phenol, in which a hydrogen atom bonded to a benzene ring having a phenolic hydroxyl group may be substituted with a substituent. Here, in a case where the phenols (A2) are a substituted phenol, the phenols (A1) are not included in the phenols (A2). As the phenols (A2), an unsubstituted phenol is preferable.

The aldehydes (C) are not particularly limited, and examples thereof include formaldehyde, acetaldehyde, butyraldehyde, propionaldehyde, terephthaldehyde, benzaldehyde, paraformaldehyde, acrolein, and the like. It is not necessary to use only one kind of aldehyde. The above aldehydes can be used singly, or two or more kinds of the aldehydes can be used in combination. Furthermore, the substances that become sources of generating the above aldehydes or the solutions of the above aldehydes can be used. Generally, in view of costs, it is preferable to use an aqueous formaldehyde solution.

The base catalyst used in the second step is not particularly limited, and examples thereof include a hydroxide of an alkali metal such as sodium hydroxide, lithium hydroxide, or potassium hydroxide, amines such as aqueous ammonia and triethylamine, an oxide and a hydroxide of an alkali earth metal such as calcium, magnesium, or barium, and a substance such as sodium carbonate, zinc acetate, or zinc oxide. One kind of these may be used singly, or two or more kinds of these may be used in combination. The amount of the base catalyst used is not particularly limited, and may be equal to or greater than 1 part by mass and equal to or smaller than 50 parts by mass with respect to 1,000 parts by mass of the phenols (A1) or the phenolic compound (B).

In the second step, a molar ratio between the reactants expressed by [aldehydes (C)]/[phenolic compound (B) + phenols (A2)] is preferably 0.5 to 2.0, and more preferably 0.8 to 1.5. In a case where the molar ratio at the time of the reaction is within the above range, it is possible to reduce the amount of the aldehydes (C) that remain without reacting and to obtain a phenolic resin having sufficient curing properties.

Furthermore, the ratio of the phenolic compound (B) to the total amount of the phenolic compound (B) and the phenols (A2) (hereinafter, referred to as "modification rate" in some cases) expressed in terms of mole is preferably 10 to 75 mol%, more preferably 15 to 60 mol%, and even more preferably 20 to 55 mol%. From the viewpoint of achieving both the flexibility and the durability of the liquid phenolic resol resin, it is preferable that the modification rate is within the above range. Specifically, in a case where the modification rate is equal to or higher than the lower limit of the above range, sufficient flexibility is achieved, and excellent durability is obtained. In a case where the modification rate is equal to or lower than the upper limit of the above range, sufficient durability is achieved, and excellent flexibility is obtained. Accordingly, in a case where both the flexibility and the durability of the liquid phenolic resol resin need to be achieved, and higher durability is required, the modification rate may be reduced within the above range. In contrast, in a case where higher flexibility is required, the modification rate may be increased within the above range.

### <Article>

The article of the present embodiment includes a substrate and a cured product of a composition containing the liquid phenolic resol resin of the present embodiment.

The article of the present embodiment is obtained, for example, by mixing the liquid phenolic resol resin with an organic solvent, coating or impregnating a substrate with the mixture, and firing or curing the resultant.

The organic solvent is not particularly limited, and examples thereof include an alcohol-based organic solvent such as methanol, ethanol, isopropanol, or butanol, a ketone-based organic solvent such as acetone, methyl ethyl ketone, or methyl isobutyl ketone, an aromatic hydrocarbon solvent such as toluene or ethyl benzene, and a mixture of these.

The substrate is not particularly limited, and examples thereof include substrates in which one kind or two or more kinds of fibers such as natural fiber, metal fiber, carbon fiber, and chemical fiber are used.

The article of the present embodiment is preferably a wet-type paper friction material. In this case, it is preferable that the liquid phenolic resol resin of the present embodiment is used by being caused to be contained in the wet-type paper friction material. As the method for preparing a wet-type paper friction material containing the liquid phenolic resol resin, for example, there is a method of impregnating a paper substrate, which is filled with metal fiber or carbon fiber and chemical fiber, a friction adjuster such as cashew dust, diatomite, and the like, with the liquid phenolic resol resin and firing or curing the resultant. In this way, the wet-type paper friction material according to the present embodiment can be obtained.

The wet-type paper friction material obtained using the liquid phenolic resol resin of the present embodiment is excellent from the viewpoint of the heat resistance or the curing properties which are characteristics of a phenolic resin, and has excellent flexibility.

### Examples

Hereinafter, the present invention will be more specifically described based on examples, but the present invention is not limited to the following examples. Furthermore, "part" and "%" described in examples and comparative examples represent "part by weight" and "% by weight" respectively.

### <Preparation of liquid phenolic resol resin>

### (Example 1)

1,000 parts of cardanol and 15 parts of p-toluenesulfonic acid were put into a reaction apparatus including a stirring device, a reflux condenser, and a thermometer, heated to 140°C, and reacted for 1 hour with stirring. After the reaction product was neutralized by the addition of 5 parts of triethylamine, 300 parts of phenol, 535 parts of a 37% aqueous formalin solution (molar ratio of 1.0 to the total amount of the cardanol reactant and phenol), and 12 parts of a 50% aqueous sodium hydroxide solution were added thereto, heated to 90°C, and reacted for 2 hours with stirring. Thereafter, while the reaction solution was being dehydrated under pressure reduced to 91 kPa, at a point in time when the internal temperature of the system reached 65°C, 280 parts of toluene and 630 parts of methanol were added thereto so as to dissolve the dehydrated product, and the solution was cooled. In this way, 2,100 parts of a liquid phenolic resol resin 1 with 45% of a nonvolatile fraction was obtained.

### (Example 2)

2,400 parts of a liquid phenolic resol resin 2 with 45% of a nonvolatile fraction was obtained in the same manner as in Example 1, except that the amount of cardanol was changed to 130 parts, the amount of p-toluenesulfonic acid was changed to 2 parts, the amount of phenol was changed to 1,170 parts, and the amount of the 37% aqueous formalin solution was changed to 1,050 parts.

### (Example 3)

2,300 parts of a liquid phenolic resol resin 3 with 46% of a nonvolatile fraction was obtained in the same manner as in Example 1, except that the amount of cardanol was changed to 390 parts, the amount of p-toluenesulfonic acid was changed to 6 parts, the amount of phenol was changed to 910 parts, and the amount of the 37% aqueous formalin solution was changed to 900 parts.

### (Example 4)

2,200 parts of a liquid phenolic resol resin 4 with 45% of a nonvolatile fraction was obtained in the same manner as in Example 1, except that the amount of cardanol was changed to 650 parts, the amount of p-toluenesulfonic acid was changed to 10 parts, the amount of phenol was changed to 6,500 parts, and the amount of the 37% aqueous formalin solution was changed to 740 parts.

### (Example 5)

2,000 parts of a liquid phenolic resol resin 5 with 45% of a nonvolatile fraction was obtained in the same manner as in Example 1, except that the amount of cardanol was changed to 1,170 parts, the amount of p-toluenesulfonic acid was changed to 18 parts, the amount of phenol was changed to 130 parts, and the amount of the 37% aqueous formalin solution was changed to 430 parts.

### (Example 6)

2,000 parts of a liquid phenolic resol resin 6 with 45% of a nonvolatile fraction was obtained in the same manner as in Example 1, except that the amount of cardanol in Example 4 was changed to 1,240 parts, the amount of p-toluenesulfonic acid was changed to 19 parts, the amount of phenol was changed to 60 parts, and the amount of the 37% aqueous formalin solution was changed to 390 parts.

### (Comparative Example 1)

1,000 parts of phenol, 740 parts of a 37% aqueous formalin solution (molar ratio to phenol = 1.0), and 20 parts of a 50% aqueous sodium hydroxide solution were put into a reaction apparatus including a stirring device, a reflux condenser, and a thermometer, and reacted for 30 minutes at 100°C with stirring. Thereafter, while the reaction solution was being dehydrated under pressure reduced to 91 kPa, at a point in time when the internal temperature of the system reached 65°C, 1,000 parts of methanol was added thereto so as to dissolve the dehydrated product, and the solution was cooled. In this way, 2,100 parts of a liquid phenolic resol resin 1' with 45% of a nonvolatile fraction was obtained.

### (Comparative Example 2)

100 parts of cardanol, 900 parts of phenol, 810 parts of a 37% aqueous formalin solution, and 20 parts of a 50% aqueous sodium hydroxide solution were put into a reaction apparatus including a stirring device, a reflux condenser, and a thermometer, heated to 100°C, and reacted for 1 hour with stirring. Thereafter, while the reaction solution was being dehydrated under pressure reduced to 91 kPa, at a point in time when the internal temperature of the system reached 65°C, 730 parts of methanol was added thereto so as to dissolve the dehydrated product, and the solution was cooled. In this way, 1,900 parts of a liquid phenolic resol resin 2' with 50% of a nonvolatile fraction was obtained.

### (Comparative Example 3)

500 parts of cardanol, 500 parts of phenol, and 570 parts of a 37% aqueous formalin solution were put into a reaction apparatus including a stirring device, a reflux condenser, and a thermometer, heated to 100 °C, and reacted with stirring. As a result, the viscosity of the reaction solution rapidly increased, and an unnecessary gelified substance was obtained in the organic solvent.

### (Comparative Example 4)

1,000 parts of phenol, 540 parts of tung oil, and 1 part of p-toluenesulfonic acid were put into a reaction apparatus including a stirring device, a reflux condenser, and a thermometer, heated to 60°C, and reacted for 30 minutes with stirring. 770 parts of a 37% aqueous formalin solution (molar ratio to phenol = 1.2), 1 part of triethanolamine and 20 parts of a 25% aqueous ammonia solution were added thereto, and reacted for 2 hours at 100°C with stirring. Then, while the reaction solution was being dehydrated under pressure reduced to 68 cmHg, at a point in time when the internal temperature of the system reached 70°C, 280 parts of toluene and 670 parts of methanol were added thereto so as to dissolve the dehydrated product, and the solution was cooled. In this way, 2,100 parts of a liquid phenolic resol resin 4' with 45% of a nonvolatile fraction was obtained.

### (Comparative Example 5)

1,000 parts of cardanol and 15 parts of p-tolulenesulfonic acid were put into a reaction apparatus including a stirring device, a reflux condenser, and a thermometer, heated to 140°C, and reacted for 1 hour with stirring. 180 parts of a 37% aqueous formalin solution (molar ratio to cardanol reactant = 0.8), 5 parts of triethylamine, and 10 parts of a 50% aqueous sodium hydroxide solution were added thereto and reacted for 2 hours at 60°C with stirring. Then, while the reaction solution was being dehydrated under pressure reduced to 91 kPa, at a point in time when the internal temperature of the system reached 65°C, 280 parts of toluene and 670 parts of methanol were added thereto so as to dissolve the dehydrated product, and the solution was cooled. In this way, 2,100 parts of a liquid phenolic resol resin 5' with 45% of a nonvolatile fraction was obtained.

### (Comparative Example 6)

By mixing 460 parts of the resin 1' obtained in Comparative Example 1 with 1,540 parts of the resin 5' obtained in Comparative Example 5 (weight ratio: 23:77), 2,000 parts of a liquid phenolic resol resin 6' was obtained.

### (Comparative Example 7)

2,130 parts of a liquid phenolic resol resin 7' was obtained in the same manner as in Comparative Example 5, except that the amount of the 37% aqueous formalin solution in Comparative Example 5 was changed to 280 parts (molar ratio to the cardanol reactant = 1.2).

### <Evaluation of liquid phenolic resol resin>

By using the liquid phenolic resol resins 1 to 6, 1', 2', and 4' to 7' obtained in the examples and the comparative examples, impregnated paper was prepared. As a substrate, commercially available filter paper (120 mm x 10 mm x 1 mm (thickness)) was used.

The liquid phenolic resol resins 1 to 6, 1', 2', and 4' to 7' obtained in the examples and the comparative examples were diluted with acetone, thereby obtaining a solution with a resin concentration of 30%. The aforementioned filter paper was impregnated with the solution, then dried for 30 minutes in an oven with a temperature of 190°, and cured, thereby obtaining a test piece.

### (Evaluation items)

Tensile strength at break: for the obtained test piece, tensile strength at break was measured based on JIS P 8113. The unit was %. The tensile strength at break was measured using the test piece prepared by the aforementioned method and a precision universal testing machine AG-IS 5kN (manufactured by Shimadzu Corporation) under the condition of a room temperature and normal pressure and a test rate of 1 mm/min.

It is possible to determine that the higher the numerical value of the tensile strength at break, the higher the flexibility of the cured product.

Hardness: the hardness of the obtained test piece was measured using an M scale according to JIS Z 2245.

It is possible to determine that the higher the numerical value of the hardness, the higher the durability of the cured product.

Fraction of cured product dissolving in acetone: the liquid phenolic resol resins 1 to 6, 1', 2', and 4' to 7' obtained in the examples and comparative examples were cured for 30 minutes at 190°C, then ground using a bead mill, and sieved. In this way, the fraction passing through a sieve with an opening size of 149 µm and remaining on a sieve with an opening size of 63 µm was taken as a sample. About 20 glass beads were put into a Soxhlet flask, and 200 ml of acetone was put into the flask. Cylindrical filter paper was put into the extraction pipe, a sample weighing about 3 g was put into the filter paper, and a condenser was mounted on and fixed to the flask such that boiling occurred. In this state, the sample was immersed in acetone for 6 hours with reflux, the acetone was then dried using a vacuum drier, and the acetone extraction rate was calculated from the weight of remnants. It is possible to determine that the smaller the fraction dissolving in acetone, the further the resin is cured.

The evaluation results relating to the evaluation items described above are shown in the following Table 1. Table 1 also shows the modification rate (mol%).

**[Table 1]**

| | (A1) or (B) | Modification rate (mol%) | Tensile strength at break (%) | Hardness (HRM) | Acetone extraction of cured product (%) |
|---|---|---|---|---|---|
| Example 1 | Cardanol | 50 | 4.9 | 76 | 0.6 |
| Example 2 | Cardanol | 3 | 2.8 | 85 | 0.4 |
| Example 3 | Cardanol | 12 | 3.3 | 82 | 0.5 |
| Example 4 | Cardanol | 24 | 4.3 | 80 | 0.5 |
| Example 5 | Cardanol | 74 | 6 | 71 | 0.6 |
| Example 6 | Cardanol | 86 | 6.4 | 62 | 0.6 |
| Comparative Example 1 | Unmodified | - | 2.2 | 89 | 0.5 |
| Comparative Example 2 | Cardanol | 3 | 2.5 | 80 | 1.2 |
| Comparative Example 3 | Cardanol | 24 | Gelified | Gelified | Gelified |
| Comparative Example 4 | Modified with tung oil | - | 4.3 | 58 | 2.5 |
| Comparative Example 5 | Cardanol | 100 | 6.6 | 56 | 0.6 |
| Comparative Example 6 | Mixture of Comparative Example 1 (unmodified) and Comparative Example 5 (cardanol) | 50 | 6.2 | 58 | 0.6 |
| Comparative Example 7 | Cardanol | 100 | 6.3 | 56 | 0.5 |

As is evident from the results shown in Table 1, the high numerical values of the hardness of the cured products of the liquid phenolic resol resins 1 to 6 obtained in Examples 1 to 6 show that the resins have high durability; the small fraction of the resins 1 to 6 dissolving in acetone shows that the resins have excellent curing properties; and the high tensile strength at break of the resins 1 to 6 shows that the resins have excellent flexibility. Particularly, it was confirmed that the liquid phenolic resol resins 1, 3, 4, and 5 obtained in Examples 1, 3, 4, and 5 are more preferable from the viewpoint of achieving both the flexibility and the durability.

In a case where a wet-type paper friction material was actually prepared using the liquid phenolic resol resins 1 to 6 of Examples 1 to 6, a wet-type paper friction material having excellent flexibility could be obtained.

The liquid phenolic resol resin 1' of Comparative Example 1 is an unmodified liquid phenolic resol resin obtained from phenol and formaldehyde. It was confirmed that although the liquid phenolic resol resin 1' of Comparative Example 1 has high durability and curing properties, the flexibility of the resin 1' is poorer than that of the liquid phenolic resol resins 1 to 6 of Examples 1 to 6.

The phenolic resin 2' of Comparative Example 2 is a liquid phenolic resol obtained using cardanol. It was confirmed that although the liquid phenolic resol 2' of Comparative Example 2 has high durability, the flexibility and the curing properties of the resin 2' are poorer than those of the liquid phenolic resol resins 1 to 6 of Examples 1 to 6. Presumably, because the cardanol modification rate of the liquid phenolic resol 2' of Comparative Example 2 is low, the flexibility thereof is poor.

In Comparative Example 3, although the amount of cardanol was larger than in Comparative Example 2, the reactants were gelified, and hence the test for evaluation could not be performed. Presumably, due to the addition of an OH group to the double bond contained in cardanol, the molecular weight of the resin rapidly increased, and hence the resin of Comparative Example 3 was gelified.

The liquid phenolic resol resin 4' of Comparative Example 4 is a liquid phenolic resol resin modified with tung oil which is drying oil. It was confirmed that although the phenolic resin 4' of Comparative Example 4 has high flexibility, the durability and the curing properties of the resin 4' are poorer than those of the liquid phenolic resol resins 1 to 6 of Examples 1 to 6.

The liquid phenolic resol resin 5' of Comparative Example 5 is a liquid phenolic resol obtained from the phenolic compound (B) and the aldehydes (C). It was confirmed that although the liquid phenolic resol resin 5' of Comparative Example 5 has high flexibility and curing properties, the durability of the resin 5' is poorer than that of the liquid phenolic resol resins 1 to 6 of Examples 1 to 6.

In Comparative Example 6, for the purpose of improving the durability of the liquid phenolic resol resin 5' of Comparative Example 5, the liquid phenolic resol resin 6' was obtained by mixing the resin 5' with the liquid phenolic resol resin 1' of Comparative Example 1. It was confirmed that although the liquid phenolic resol resin 6' of Comparative Example 6 has high flexibility and curing properties, the durability of the resin 6' is poorer than that of the liquid phenolic resol resins 1 to 6 of Examples 1 to 6. Presumably, because co-condensation did not occur between the liquid phenolic resol resin 5' and the liquid phenolic resol resin 1', the result obtained from Comparative Example 6 was not significantly different from the result obtained from Comparative Example 5.

In Comparative Example 7, for the purpose of improving the durability of the liquid phenolic resol resin 5' of Comparative Example 5, the liquid phenolic resol resin 7' was obtained by increasing the amount of the aldehydes (C) so as to increase the cross-linking density. However, it was confirmed that although the flexibility of the liquid phenolic resol resin 7' of Comparative Example 7 is slightly reduced compared to the flexibility of the liquid phenolic resol resin 5' of Comparative Example 5, the durability and the curing properties of the resin 7' are not improved.

From the above results, it was confirmed that the liquid phenolic resol resins 1 to 6 obtained in Examples 1 to 6 can achieve both the flexibility and the curing properties. Particularly, it was confirmed that the liquid phenolic resol resins 1, 3, 4, and 5, obtained in Examples 1, 3, 4, and 5 are more preferable from the viewpoint of achieving both the flexibility and the durability.

Hitherto, the preferable examples of the present invention have been described, but the present invention is not limited to the examples. Within a scope that does not depart from the gist of the present invention, the addition, omission, or substitution of the constituents can be performed, and other modifications can be carried out. The present invention is limited not to the above description but only to the attached claims.

## Claims

1. A liquid phenolic resol resin comprising a partial structure represented by General Formula (P-1). 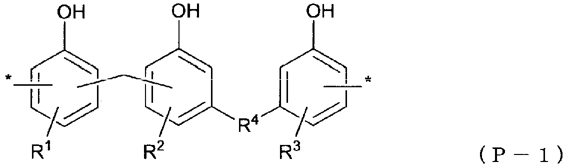 [In the formula, R¹, R², and R³ each independently represent a hydrogen atom or -CH₂OH, R⁴ represents a linear unsaturated hydrocarbon group having 10 or more carbon atoms, and * represents a bond. Here, a hydrogen atom bonded to a benzene ring having a phenolic hydroxyl group may be substituted with a substituent.]

2. A method for preparing the liquid phenolic resol resin according to claim 1, comprising:
a first step of obtaining a phenolic compound (B) by reacting phenols (A1), in which a linear unsaturated hydrocarbon group having 10 or more carbon atoms is bonded to at least one or more meta-positions, in the presence of an acid catalyst; and
a second step of reacting the phenolic compound (B) with phenols (A2) other than the phenols (A1) (here, a hydrogen atom bonded to a benzene ring having a phenolic hydroxyl group may be substituted with a substituent) and aldehydes (C) in the presence of a base catalyst.

3. The method for preparing the liquid phenolic resol resin according to claim 2, wherein the phenols (A1) include a compound represented by General Formula (A1-1). 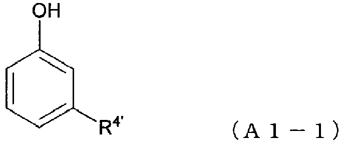 [In the formula, R⁴' represents a linear unsaturated hydrocarbon group having 10 or more carbon atoms. Here, a hydrogen atom bonded to a benzene ring having a phenolic hydroxyl group may be substituted with a substituent.]

4. The method for preparing the liquid phenolic resol resin according to claim 3,
wherein the phenols (A1) are at least one or more phenols selected from the group consisting of cardanol, cardol, and 2-methyl cardol.

5. An article comprising:
a substrate; and
a cured product of a composition containing the liquid phenolic resol resin according to claim 1.

6. The article according to claim 5 that is a wet-type paper friction material.
